# DEMANDE DE BREVET EUROPEEN

(11) **EP 4 738 136 A1**
(43) Date de publication de la demande: **06.05.2026**
(21) Numéro de dépôt: 25209546.8
(22) Date de dépôt: 17.10.2025
(51) Int. Cl.: G06F 13/40, G06F 13/42, H04L 12/40

(54) **CIRCUIT INTEGRE POUR COMMUNICATION CAN**

(30) Priorité: 31.10.2024 FR 2411927
(71) Demandeur: STMicroelectronics International N.V., 1228 Plan-les-Ouates, Geneva (CH)
(72) Inventeur: MOENECLAEY, Nicolas, 38000 Grenoble (FR); ROUSSEL, Christophe, 38640 Claix (FR); MASSON, Olivier, 38760 Saint paul de varces (FR)
(74) Mandataire: Casalonga

(57) **Abrégé**

Selon un aspect, il est proposé un circuit intégré comprenant :
- une unité de traitement numérique (MCU),
- un circuit émetteur/récepteur (TRC) configuré pour transmettre des données entre l'unité de traitement numérique (MCU) et un bus de données « Controller Area Network », « CAN », le circuit émetteur/récepteur (TRC) étant configuré pour délivrer des signaux différentiels, appelés « CANH » » et « CANL », selon un mode dominant et un mode récessif, chaque transition des signaux différentiels « CANH » et « CANL » entre le mode dominant et le mode récessif étant synchronisée à partir de bits d'adaptation reçus par le circuit émetteur/récepteur,
- un circuit d'ajustement (ADPC) d'au moins un bit d'adaptation en fonction d'au moins une comparaison entre le mode commun des signaux différentiels « CANH » et « CANL » et au moins une tension seuil.

## Description

Des modes de réalisation et de mise en œuvre concernent la communication par bus « CAN », abréviation de l'anglais « Controller Area Network ».

Le protocole « CAN » est couramment utilisé dans les véhicules automobiles pour la gestion des communications entre divers dispositifs électroniques, tels que les capteurs, actionneurs et unités de contrôle. Un réseau « CAN » est ainsi défini entre ces différents dispositifs électroniques, reliés entre eux par un bus « CAN ». Chaque dispositif électronique forme alors un nœud du réseau « CAN ».

Un bus « CAN » comporte deux fils configurés pour transporter deux signaux « CANH » (« CAN High ») et « CANL » (« CAN Low ») entre des nœuds du réseau « CAN ». Les signaux « CANH » et « CANL » sont générés par un circuit émetteur/récepteur des différents dispositifs électroniques du réseau « CAN ».

Un bus « CAN » peut fonctionner dans un mode dominant ou dans un mode récessif.

En mode dominant, la différence de potentiel entre le signal « CANH » et le signal « CANL » est élevée. En particulier, le signal « CANH » atteint un niveau élevé, de l'ordre de 3,5V, et le signal « CANL » un niveau bas, de l'ordre de 1,5V.

En mode récessif, les niveaux des signaux « CANH » et « CANL » convergent autour de 2,5V, réduisant ainsi la différence de potentiel.

Cependant, il peut se produire un décalage temporel entre les signaux « CANH » et « CANL » lors d'un changement de mode de fonctionnement.

Ce décalage temporel peut entraîner de brèves impulsions (pouvant être désignées par l'expression anglo-saxonne « glitchs ») sur le mode commun des signaux « CANH » et « CANL ». Le mode commun des signaux « CANH » et « CANL » correspond à la composante de tension commune aux deux lignes de signal par rapport à un point de référence commun, par exemple par rapport à la masse. Le mode commun peut ainsi correspondre à la moyenne des tensions des signaux « CANH » et « CANL ».

Ces brèves impulsions peuvent causer des perturbations sur le fonctionnement du bus CAN. Par exemple, ces perturbations peuvent augmenter les émissions électromagnétiques (« EMI ») indésirables du bus « CAN ». Ces émissions électromagnétiques peuvent affecter des circuits électroniques avoisinants. En outre, ces perturbations peuvent être amplifiées selon la température.

Il existe donc un besoin de proposer une solution permettant d'améliorer la communication dans un réseau « CAN » en réduisant les perturbations pouvant notamment entraîner des émissions électromagnétiques indésirables.

Selon un aspect, il est proposé un circuit intégré comprenant :
- une unité de traitement numérique -notamment un microcontrôleur-,
- un circuit émetteur/récepteur configuré pour transmettre des données entre l'unité de traitement numérique et un bus de données « Controller Area Network », « CAN », le circuit émetteur/récepteur étant configuré pour délivrer des signaux différentiels, appelés « CANH » » et « CANL », selon un mode dominant et un mode récessif, chaque transition des signaux différentiels « CANH » et « CANL » entre le mode dominant et le mode récessif étant synchronisée à partir de bits d'adaptation reçus par le circuit émetteur/récepteur,
- un circuit d'ajustement d'au moins un bit d'adaptation en fonction d'au moins une comparaison entre le mode commun des signaux différentiels « CANH » et « CANL » et au moins une tension seuil.

Un tel circuit d'ajustement permet de réduire les perturbations sur le mode commun des signaux « CANH » et « CANL » en ajustant les bits d'adaptation afin de mieux synchroniser les signaux « CANH » et « CANL ». Un tel circuit d'ajustement permet ainsi de limiter les émissions électromagnétiques (« EMI ») indésirables du bus « CAN » résultants des perturbations sur le mode commun des signaux « CANH » et « CANL ».

En outre, un tel circuit d'ajustement présente l'avantage de ne pas être impacté par des changements de température. En effet, un tel circuit d'ajustement se règle automatiquement lors des dérives de température du fait de la surveillance du mode commun des signaux « CANL » et « CANH ».

Dans un mode de réalisation avantageux, le circuit d'ajustement comprend :
- un circuit de détection configuré pour détecter des perturbations sur le mode commun des signaux différentiels « CANH » et « CANL », et
- un circuit de traitement configuré pour ajuster au moins un bit d'adaptation lorsqu'une perturbation sur le mode commun est détectée par le circuit de détection.

Avantageusement, l'unité de traitement numérique est configurée pour délivrer un signal de commande indiquant le mode des signaux « CANL » et « CANH ». Le circuit de traitement est alors configuré pour recevoir le signal de commande afin d'adapter au moins un bit d'adaptation associé à la transition vers le mode des signaux « CANL » et « CANH » correspondant au mode indiqué par le signal de commande lorsqu'une perturbation est détectée par le circuit de détection.

De préférence, le circuit de détection est configuré pour recevoir les signaux « CANH » et « CANL » et comprend :
- un premier élément résistif et un deuxième élément résistif montés en série et configuré pour recevoir les signaux « CANL » et « CANH » de manière à obtenir le mode commun de ces signaux « CANL » et « CANH » sur un nœud commun entre le premier élément résistif et le deuxième élément résistif,
- un troisième élément résistif, un quatrième élément résistif et une source de courant montés en série entre le nœud commun du premier élément résistif et du deuxième élément résistif et un nœud de référence, notamment à une masse,
- un filtre passe-bas présentant une entrée connectée à un nœud commun entre le troisième élément résistif et le quatrième élément résistif de manière à générer en sortie une tension seuil pour surveiller le mode commun des signaux « CANH » et « CANL »,
- un premier comparateur présentant une première entrée connectée au nœud commun entre le premier élément résistif et le deuxième élément résistif, et une deuxième entrée connectée à la sortie du filtre passe-bas,
- un deuxième comparateur présentant une première entrée connectée à un nœud commun entre le quatrième élément résistif et la source de courant, et une deuxième entrée connectée à la sortie du filtre passe-bas,
- un circuit additionneur présentant deux entrées connectées respectivement aux sorties des premier et deuxième comparateurs, et une sortie connectée au circuit de traitement.

Un tel circuit de détection est simple et occupe peu de place dans le circuit intégré.

Avantageusement, le circuit de traitement comprend :
- un premier compteur configuré pour être incrémenté à chaque détection des perturbations sur le mode commun par le circuit de détection lors d'une transition vers le mode dominant, la valeur du premier compteur définissant au moins un bit d'adaptation pour la transition vers le mode dominant,
- un deuxième compteur configuré pour être incrémenté à chaque détection des perturbations sur le mode commun par le circuit de détection lors d'une transition vers le mode récessif, la valeur du deuxième compteur définissant au moins un bit d'adaptation pour la transition vers le mode récessif.

Dans un mode de réalisation avantageux, le circuit de traitement comprend un circuit de surveillance d'événements connecté à la sortie du circuit de détection et étant configuré pour incrémenter, à chaque détection de perturbation, le premier compteur ou le deuxième compteur selon le mode des signaux « CANH » et « CANL » indiqué par le signal de commande délivré par l'unité de traitement numérique.

Selon un autre aspect, il est proposé un dispositif électronique comprenant un circuit intégré tel que décrit précédemment. Un tel dispositif électronique peut alors être intégré dans un réseau « CAN ».

D'autres avantages et caractéristiques de l'invention apparaîtront à l'examen de la description détaillée de modes de réalisation, nullement limitatifs, et des dessins annexés sur lesquels :
[Fig 1] ;
[Fig 2] ;
[Fig 3] ;
[Fig 4] ;
[Fig 5] ; et
[Fig 6] illustrent des modes de réalisation et de mise en œuvre de l'invention.

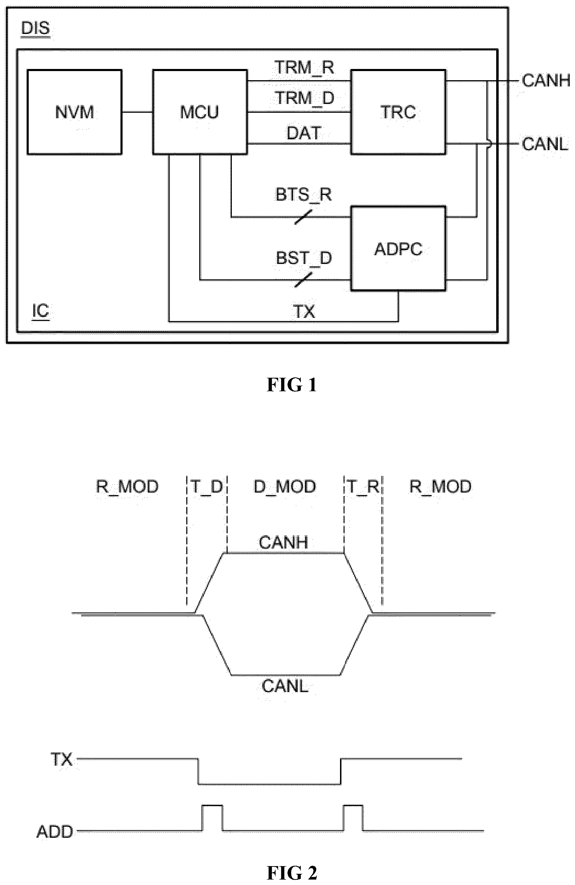

La figure 1 illustre un dispositif électronique DIS configuré pour fonctionner dans un réseau « CAN » (abréviation de l'anglais « Controller Area Network »). Le dispositif électronique DIS peut ainsi former un nœud du réseau « CAN ». Le dispositif électronique DIS peut par exemple être un élément d'une automobile (« ECU », boîtier « ABS », Tableau de bord », etc...).

Le dispositif électronique DIS comprend un circuit intégré IC. Le circuit intégré IC comprend une unité de traitement numérique MCU, par exemple un microcontrôleur MCU, et un circuit émetteur-récepteur TRC permettant d'effectuer une communication « CAN ». En particulier, le circuit émetteur-récepteur TRC est configuré pour être connecté à un bus « CAN » reliant les différents nœuds du réseau « CAN ».

En particulier, le circuit émetteur-récepteur TRC peut fonctionner en émission. Dans ce cas, le circuit émetteur-récepteur est configuré pour recevoir des données DAT fournies par l'unité de traitement numérique MCU afin de les transmettre au bus « CAN ».

Le circuit émetteur-récepteur TRC peut fonctionner en réception. Dans ce cas, le circuit émetteur-récepteur TRC est configuré pour recevoir des données depuis le bus « CAN » afin de les transmettre à l'unité de traitement numérique MCU.

Le circuit émetteur-récepteur TRC est configuré pour commander les signaux « CANH » et « CANL » selon un mode dominant ou bien selon un mode récessif. Le mode dominant et le mode récessif sont définis par l'unité de traitement numérique MCU, notamment via un signal de commande TX.

La figure 2 illustre les signaux « CANH » et « CANL » selon le mode dominant D_MOD et selon le mode récessif R_MOD. Un décalage des signaux « CANH » et « CANL » peut entraîner des perturbations sur le mode commun des signaux « CANH » et « CANL ». Ce décalage peut avoir lieu lors des transitions T_D, T_R entre le mode dominant D_MOD et le mode récessif R_MOD. Ces perturbations peuvent causer des émissions électromagnétiques indésirables sur le bus « CAN ».

Le mode commun des signaux « CANH » et « CANL » correspond à la composante de tension commune aux deux lignes de signal par rapport à un point de référence commun, par exemple par rapport à la masse. Le mode commun peut ainsi correspondre à la moyenne des tensions des signaux « CANH » et « CANL ».

Afin de définir des délais pour les transitions des signaux « CANH » et « CANL » entre le mode dominant et le mode récessif, le circuit émetteur/récepteur TRC est configuré pour recevoir au moins un signal numérique d'adaptation TRM_R, TRM_D permettant d'ajuster les transitions des signaux « CANH » et « CANL ». En particulier, un signal numérique TRM_R peut être utilisé pour les transitions des signaux « CANH » et « CANL » vers le mode récessif, et un signal numérique TRM_D peut être utilisé pour les transitions des signaux « CANH » et « CANL » vers le mode dominant. Chaque signal numérique d'adaptation TRM_R, TRM_D peut être délivré par l'unité de traitement numérique MCU. Chaque signal numérique d'adaptation TRM_R, TRM_D comporte plusieurs bits d'adaptation. Ces bits d'adaptation peuvent également être désignés par l'expression « bits de trimming ». Ces bits d'adaptation servent à ajuster les fronts des signaux « CANH » et « CANL » pour les transitions entre le mode dominant et le mode récessif.

Chaque signal numérique d'adaptation est pris en compte par le circuit émetteur-récepteur pour effectuer des ajustements sur les signaux « CANH » et « CANL » afin de synchroniser les transitions des niveaux de tension des signaux « CANH » et « CANL ». Cet ajustement peut par exemple être réalisé par un circuit de temporisation du circuit émetteur/récepteur TRC configurable par les bits d'adaptation.

En particulier, le circuit intégré comporte également un circuit ADPC d'ajustement de bits d'adaptation.

Le circuit ADPC d'ajustement des bits d'adaptation est configuré pour ajuster au moins un bit d'adaptation, notamment plusieurs bits d'adaptation, pour que le mode commun des signaux « CANH » et « CANL » soit maintenue dans une enveloppe. Par exemple, le circuit d'ajustement ADPC est configuré pour ajuster des bits d'adaptation BTS_R du signal numérique d'ajustement TRM_R, et pour ajuster des bits d'adaptation BTS_D du signal numérique d'ajustement TRM_D. Les bits d'adaptation BTS_R peuvent correspondre à N bits de poids faible du signal numérique d'ajustement TRM_R. Les bits d'adaptation BTS_D peuvent correspondre à N bits de poids faible du signal numérique d'ajustement TRM_D. Les bits d'adaptation BTS_R et BTS_D peuvent être transmis à l'unité de traitement numérique, comme illustré, afin de modifier les signaux numériques d'adaptation TRM_R et TRM_D. En variante, les bits d'adaptation peuvent être transmis directement au circuit émetteur/récepteur TRC. Dans ce cas, l'unité de traitement numérique peut simplement transmettre K bits de poids fort des signaux TRM_D et TRM_R au circuit émetteur/récepteur TRC, K étant égal à M-N où M est le nombre total de bits d'adaptation du signal d'adaptation TRM_R ou TRM_D. Ces K bits d'adaptation peuvent être stockés dans une mémoire non volatile NVM qui peut être accédée en lecture par l'unité de traitement numérique MCU. Dans ce cas, l'unité de traitement numérique MCU peut seulement transmettre ces K bits de poids fort au circuit émetteur/récepteur TRC qui les combine avec les N bits de poids faible pour former le signal numérique d'adaptation TRM_R ou TRM_D.

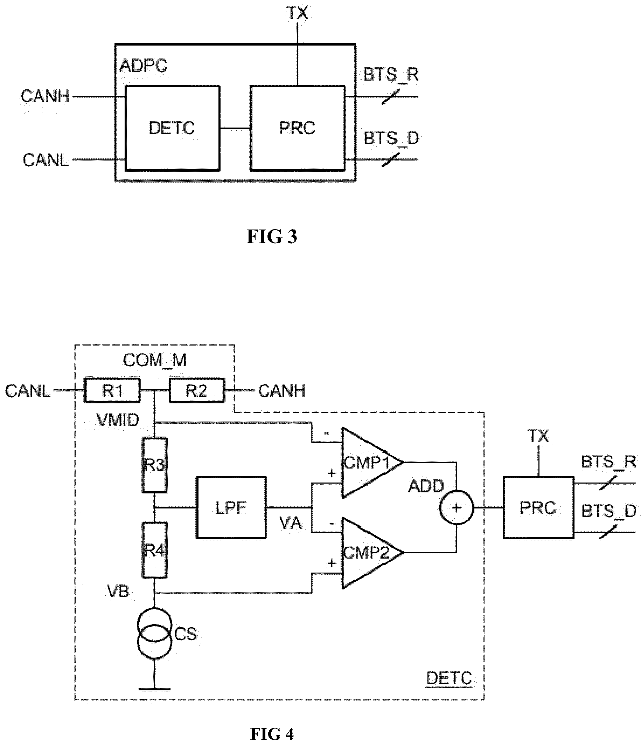

Comme illustré à la figure 3, afin d'ajuster les bits d'adaptation, le circuit d'ajustement ADPC comporte un circuit DETC de détection de perturbations ainsi qu'un circuit PRC de traitement.

Le circuit DETC de détection de perturbations est configuré pour recevoir en entrée les signaux « CANH » et « CANL » délivrés par le circuit émetteur/récepteur TRC et pour déterminer si un ajustement de la synchronisation est nécessaire en surveillant le mode commun des signaux « CANH » et « CANL ». En particulier, le circuit ADPC de détection de perturbations est configuré pour détecter des perturbations, notamment des « glitchs » sur le mode commun des signaux « CANH » et « CANL ».

Le circuit de traitement PRC est configuré pour ajuster la valeur d'au moins un bit d'adaptation lorsqu'une correction de la synchronisation des signaux « CANL » et « CANH » est requise. Plus particulièrement, le circuit de traitement PRC est configuré pour ajuster les bits d'adaptation lorsqu'une perturbation est détectée sur le mode commun des signaux « CANH » et « CANL ».

Le circuit de traitement PRC est configuré pour savoir s'il est nécessaire de corriger le mode dominant ou bien le mode récessif. Pour ce faire, le circuit de traitement PRC est configuré pour recevoir le signal de commande TX. Comme vu précédemment, ce signal de commande TX indique si le dispositif électronique DIS est dans un mode dominant ou récessif. Ce signal de commande TX est généré par l'unité de traitement numérique. Par exemple, lorsque TX vaut '0', alors le dispositif électronique DIS est dans un mode dominant, et lorsque TX vaut '1' alors le dispositif électronique DIS est dans un mode récessif.

Ainsi, lorsque le circuit de traitement PRC détecte qu'une correction de la synchronisation est requise quand le signal de commande TX indique que le dispositif électronique DIS est dans un mode dominant, alors cela signifie que la correction de la synchronisation des signaux « CANL » et « CANH » est requise pour le mode dominant.

De même, lorsque le circuit de traitement PRC détecte qu'une correction de la synchronisation est requise quand le signal d'information TX indique que le dispositif électronique DIS est dans un mode récessif, alors cela signifie que la correction de la synchronisation des signaux « CANL » et « CANH » est requise pour le mode récessif.

Un tel circuit d'ajustement ADPC permet de réduire les perturbations sur le mode commun des signaux « CANH » et « CANL » en ajustant les bits d'adaptation afin de mieux synchroniser les signaux « CANH » et « CANL ». Le circuit d'ajustement ADPC permet ainsi de limiter les émissions électromagnétiques (« EMI ») indésirables du bus « CAN » résultants des perturbations sur le mode commun des signaux « CANH » et « CANL ».

En outre, le circuit d'ajustement ADPC présente l'avantage de ne pas être impacté par des changements de température. En effet, le circuit d'ajustement ADPC se règle automatiquement lors des dérives de température du fait de la surveillance du mode commun des signaux « CANL » et « CANH ».

La figure 4 illustre un premier mode de réalisation d'un circuit DETC de détection de perturbations.

Le circuit DETC de détection de perturbations comprend un premier élément résistif R1 présentant une première borne configurée pour recevoir le signal « CANL ».

Le circuit DETC de détection de perturbations comprend aussi un deuxième élément résistif R2 présentant une première borne configurée pour recevoir le signal « CANH ».

Le premier élément résistif R1 et le deuxième élément résistif R2 présentent chacun une deuxième borne connectée à un nœud commun du circuit d'ajustement.

Avantageusement, le premier élément résistif R1 et le deuxième élément résistif R2 ont une même valeur ohmique. Cela permet d'obtenir une tension sur le nœud commun, entre le premier élément résistif R1 et le deuxième élément résistif R2, correspondant à la tension du mode commun. De préférence, la valeur du premier élément résistif R1 et du deuxième élément résistif R2 est choisie afin d'éviter de perturber la communication « CAN ». En particulier, cette valeur est choisie pour présenter un ordre de grandeur supérieur à celui de la résistance différentielle du bus « CAN » dans le mode récessif.

Le circuit DETC de détection de perturbations comprend aussi un troisième élément résistif R3 présentant une première borne connectée au nœud commun entre le premier élément résistif R1 et le deuxième élément résistif R2.

Le circuit DETC de détection de perturbations comprend également un quatrième élément résistif R4. Ce quatrième élément résistif R4 présente une première borne connectée à une deuxième borne du troisième élément résistif R3.

Le circuit DETC de détection de perturbations comprend aussi une source de courant CS présentant une première borne connectée à une deuxième borne du quatrième élément résistif R4, et une deuxième borne connectée à un nœud de référence. Ce nœud de référence peut notamment être relié à une masse. De préférence, le courant défini par la source de courant est relativement faible afin d'éviter de tirer une quantité trop importante de courant sur les signaux « CANL » et « CANH », ce qui pourrait impacter la communication CAN.

Ainsi, le troisième élément résistif R3, le quatrième élément résistif R4 et la source de courant CS sont disposés en série entre le nœud commun entre le premier élément résistif R1 et le deuxième élément résistif R2, et le nœud de référence auquel est connectée la deuxième borne de la source de courant CS.

La valeur du troisième élément résistif R3 et la valeur du quatrième élément résistif R4 sont définies en fonction de l'enveloppe souhaitée pour détecter les perturbations sur le mode commun des signaux « CANL » et « CANH ». Ces valeurs peuvent être égales ou bien différentes l'une de l'autre.

En particulier, le troisième élément résistif R3 et le quatrième élément résistif R4 permettent de définir une tension VMID sur la première borne du troisième élément résistif R3 et une tension VB sur la deuxième borne du quatrième élément résistif R4.

La tension VMID correspond à la tension du mode commun.

La tension VB correspondant à la tension du mode commun moins une tension seuil, par exemple de 200 millivolts.

Le circuit de détection de perturbations comprend un filtre passe-bas LPF. Le filtre passe-bas LPF présente une entrée connectée à la deuxième borne du troisième élément résistif R3 et à la première borne du quatrième élément résistif R4.

Le filtre passe-bas LPF présente une sortie configurée pour délivrer une tension VA. La tension VA correspond à la tension du mode commun moins une tension seuil, par exemple de 100millivolts.

La sortie du filtre passe-bas LPF est connectée à deux comparateurs CMP1, CMP2 afin de générer une enveloppe inverse utilisée pour surveiller le mode commun des signaux « CANL » et « CANH ».

En particulier, le circuit DETC de détection de perturbations comprend un premier comparateur CMP1 de tensions. Ce premier comparateur CMP1 présente une première entrée, notamment une entrée inverseuse, connectée à la première borne du troisième élément résistif R3 afin de recevoir la tension VMID.

Le premier comparateur CMP1 présente également une deuxième entrée, notamment une entrée non inverseuse, connectée à la sortie du filtre passe-bas LPF, plus particulièrement à la sortie du filtre passe-bas LPF, de manière à recevoir la tension VA.

Le premier comparateur CMP1 présente une sortie configurée pour délivrer une tension correspondant à la différence entre la tension VA et la tension VMID.

Le circuit DETC de détection de perturbations comprend également un deuxième comparateur CMP2 de tensions. Ce deuxième comparateur CMP2 présente une première entrée, notamment une entrée inverseuse, connectée à la sortie du filtre passe-bas LPF, plus particulièrement à la sortie du filtre passe-bas LPF, de manière à recevoir la tension VA.

Le deuxième comparateur CMP2 présente également une deuxième entrée, notamment une entrée non inverseuse, connectée à la deuxième borne du quatrième élément résistif R4 et à la première borne de la source de courant CS, afin de recevoir la tension VB.

Le deuxième comparateur CMP2 présente une sortie configurée pour délivrer une tension correspondant à la différence entre la tension VA et la tension VMID.

Le premier comparateur CMP1 et le deuxième comparateur CMP2 permettent de comparer le mode commun des signaux « CANH » et « CANL » à l'enveloppe inverse définie. Avantageusement, les comparateurs CMP1, CMP2 sont réalisés dans le circuit intégré IC afin d'être suffisamment rapide pour détecter les transitions entre mode dominant et mode récessif.

Le circuit DETC de détection de perturbations comprend également un circuit additionneur ADD configuré pour sommer le signal en sortie du premier comparateur CMP1 et le signal en sortie du deuxième comparateur CMP2. En particulier, le circuit additionneur ADD présente une première entrée connectée à la sortie du premier comparateur CMP1 et une deuxième CMP2 entrée connectée à la sortie du deuxième comparateur.

Ce circuit additionneur ADD permet de détecter des « glitchs », c'est-à-dire de brèves impulsions (positives ou négatives) sur le mode commun sortant de l'enveloppe définie. Ainsi, le circuit additionneur ADD permet de détecter si une correction de la synchronisation des signaux « CANL » et « CANH » est requise. La figure 2 illustre un exemple de signal pouvant être obtenu en sortie du circuit additionneur ADD.

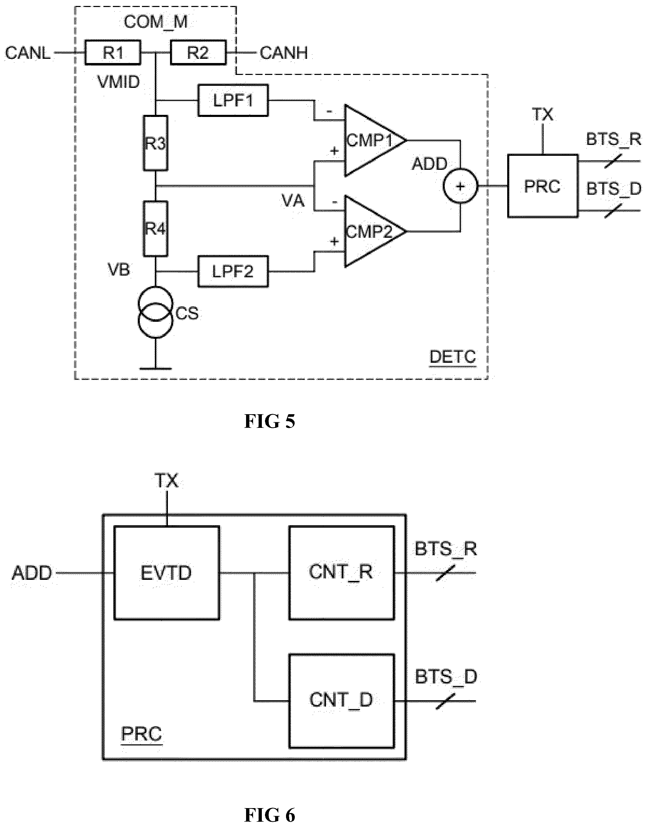

La figure 5 illustre un deuxième mode de réalisation d'un circuit DETC de détection de perturbations.

Ce deuxième mode de réalisation diffère du premier mode de réalisation en ce qu'il permet de définir une enveloppe et non pas une enveloppe inverse. En effet, au lieu de définir une enveloppe inverse en utilisant un unique filtre passe-bas LPF, deux filtres passe-bas LPF1, LPF2 sont utilisés pour définir l'enveloppe permettant de surveiller le mode commun des signaux « CANH » et « CANL ».

Ainsi, un premier filtre passe-bas LPF1 présente une entrée connectée à la première borne du troisième élément résistif R3 et une sortie connectée à une entrée du premier comparateur CMP1. Ce premier filtre passe-bas LPF1 permet de définir un premier seuil de tension de l'enveloppe.

Le deuxième filtre passe-bas LPF2 présente une entrée connectée à la deuxième borne du quatrième élément résistif R4 et une sortie connectée à une entrée du deuxième comparateur CMP2. Ce deuxième filtre passe-bas LPF2 permet de définir un deuxième seuil de tension de l'enveloppe.

Le premier comparateur CMP1 et le deuxième comparateur CMP2 sont alors configurés pour recevoir le mode commun des signaux « CANH » et « CANL » en étant connecté à la deuxième borne du troisième élément résistif R3 et à la première borne du quatrième élément résistif R4.

Par rapport à ce deuxième mode de réalisation, le premier mode de réalisation du circuit DETC de détection de perturbations illustré à la figure 4 présente l'avantage d'occuper un plus faible espace dans le circuit intégré du fait de l'utilisation d'un seul filtre passe-bas LPF à la place de deux filtres passe-bas LPF1, LPF2.

La figure 6 illustre un mode de réalisation d'un circuit de traitement PRC. Ce circuit de traitement PRC comprend un circuit EVTD de surveillance d'événements et deux compteurs CNT_R, CNT_D.

Le circuit EVTD de surveillance d'événements est connecté à la sortie du circuit additionneur ADD afin de détecter si la valeur des bits d'ajustements doit être ajustée en fonction de la valeur en sortie du circuit additionneur.

Le circuit EVTD de surveillance d'événements peut par exemple comprendre une bascule « flip-flop » configurée pour être réinitialisée à chaque passage en mode dominant ainsi qu'à chaque passage en mode récessif à partir du signal de commande TX.

Selon le mode des signaux « CANH » et « CANL » indiqué par le signal de commande TX, le compteur CNT_R ou le compteur CNT_D peut être incrémenté par le circuit EVTD de surveillance d'événements lorsque la valeur des bits d'ajustements doit être ajustée lorsqu'une correction de la synchronisation est requise.

En particulier, le compteur CNT_D est utilisé pour ajuster les bits d'adaptation pour le mode dominant, et le compteur CNT_R est utilisé pour ajuster les bits d'adaptation pour le mode récessif.

La valeur de chaque compteur CNT_R, CNT_D permet de définir les bits d'adaptation à ajuster.

Par exemple, chaque signal numérique d'adaptation TMR_R, TMR_D comporte M bits d'adaptation. Chaque compteur CNT_R, CNT_D peut alors être un compteur sur N bits permettant d'adapter N bits de poids faible du signal numérique d'adaptation TMR_R ou TMR_D, N étant inférieur à M. Chaque signal d'adaptation TMR_R, TMR_D peut également comprendre K bits de poids fort stockés dans une mémoire non volatile, K étant égale à M-N.

La valeur du compteur CNT_D associé au mode dominant peut être incrémenté lorsqu'une perturbation est détectée sur le mode commun des signaux « CANH » et « CANL », notamment lors d'une transition vers le mode dominant.

La valeur du compteur CNT_R associé au mode récessif peut être incrémenté lorsqu'une perturbation est détectée sur le mode commun des signaux « CANH » et « CANL », notamment lors d'une transition vers le mode récessif.

Un tel circuit de traitement PRC permet d'ajuster simplement les bits d'adaptation.

## Revendications

1. Circuit intégré comprenant :
- une unité de traitement numérique (MCU),
- un circuit émetteur/récepteur (TRC) configuré pour transmettre des données entre l'unité de traitement numérique (MCU) et un bus de données « Controller Area Network », « CAN », le circuit émetteur/récepteur (TRC) étant configuré pour délivrer des signaux différentiels, appelés « CANH » » et « CANL », selon un mode dominant et un mode récessif, chaque transition des signaux différentiels « CANH » et « CANL » entre le mode dominant et le mode récessif étant synchronisée à partir de bits d'adaptation reçus par le circuit émetteur/récepteur,
- un circuit d'ajustement (ADPC) d'au moins un bit d'adaptation en fonction d'au moins une comparaison entre le mode commun des signaux différentiels « CANH » et « CANL » et au moins une tension seuil.

2. Circuit intégré selon la revendication 1, dans lequel le circuit d'ajustement (ADPC) comprend :
- un circuit de détection (DETC) configuré pour détecter des perturbations sur le mode commun des signaux différentiels « CANH » et « CANL », et
- un circuit de traitement (PRC) configuré pour ajuster au moins un bit d'adaptation lorsqu'une perturbation sur le mode commun est détectée par le circuit de détection (DETC).

3. Circuit intégré selon la revendication 2, dans lequel l'unité de traitement numérique (MCU) est configurée pour délivrer un signal de commande (TX) indiquant le mode des signaux « CANL » et « CANH », et dans lequel le circuit de traitement (PRC) est configuré pour recevoir le signal de commande (TX) afin d'adapter au moins un bit d'adaptation associé à la transition vers le mode des signaux « CANL » et « CANH » correspondant au mode indiqué par le signal de commande (TX) lorsqu'une perturbation est détectée par le circuit de détection (DETC).

4. Circuit intégré selon la revendication 3, dans lequel le circuit de détection (DETC) est configuré pour recevoir les signaux « CANH » et « CANL » et comprend :
- un premier élément résistif (R1) et un deuxième élément résistif (R2) montés en série et configuré pour recevoir les signaux « CANL » et « CANH » de manière à obtenir le mode commun de ces signaux « CANL » et « CANH » sur un nœud commun entre le premier élément résistif (R1) et le deuxième élément résistif (R2),
- un troisième élément résistif (R3), un quatrième élément résistif (R4) et une source de courant (CS) montés en série entre le nœud commun du premier élément résistif (R1) et du deuxième élément résistif (R2) et un nœud de référence,
- un filtre passe-bas (LPF) présentant une entrée connectée à un nœud commun entre le troisième élément résistif (R3) et le quatrième élément résistif (R4) de manière à générer en sortie une tension seuil pour surveiller le mode commun des signaux « CANH » et « CANL »,
- un premier comparateur (CMP1) présentant une première entrée connectée au nœud commun entre le premier élément résistif (R1) et le deuxième élément résistif (R2), et une deuxième entrée connectée à la sortie du filtre passe-bas (LPF),
- un deuxième comparateur (CMP2) présentant une première entrée connectée à un nœud commun entre le quatrième élément résistif (R4) et la source de courant (CS), et une deuxième entrée connectée à la sortie du filtre passe-bas (LPF),
- un circuit additionneur (ADD) présentant deux entrées connectées respectivement aux sorties des premier et deuxième comparateurs (CMP l, CMP2), et une sortie connectée au circuit de traitement (PRC).

5. Circuit intégré selon l'une des revendications 2 à 4, dans lequel le circuit de traitement comprend :
- un premier compteur (CNT_D) configuré pour être incrémenté à chaque détection des perturbations sur le mode commun par le circuit de détection (DETC) lors d'une transition vers le mode dominant, la valeur du premier compteur (CNT_D) définissant au moins un bit d'adaptation pour la transition vers le mode dominant,
- un deuxième compteur (CNT_R) configuré pour être incrémenté à chaque détection des perturbations sur le mode commun par le circuit de détection (DETC) lors d'une transition vers le mode récessif, la valeur du deuxième compteur (CNT_R) définissant au moins un bit d'adaptation pour la transition vers le mode récessif.

6. Circuit intégré selon la revendication 5, dans lequel le circuit de traitement comprend un circuit (EVTD) de surveillance d'événements connecté à la sortie du circuit de détection (DETC) et étant configuré pour incrémenter, à chaque détection de perturbation, le premier compteur (CNT_D) ou le deuxième compteur (CNT_R) selon le mode des signaux « CANH » et « CANL » indiqué par le signal de commande (TX) délivré par l'unité de traitement numérique (MCU).

7. Dispositif électronique comprenant un circuit intégré (IC) selon l'une des revendications 1 à 6.
